# EUROPEAN PATENT APPLICATION

(11) **EP 4 613 654 A1**
(43) Date of publication of application: **10.09.2025**
(21) Application number: 25161349.3
(22) Date of filing: 03.03.2025
(51) Int. Cl.: B64U 50/19, B64U 50/37, B64U 70/90, B64U 80/25, B64U 101/30

(54) **SYSTEM AND METHOD FOR PROVIDING ENTERTAINMENT, SUPERVISION OR SURVEILLANCE SERVICES**

(30) Priority: 05.03.2024 IT 202400004813
(71) Applicant: EGIDA S.R.L. O, IN FORMA ABBREVIATA, EG S.R.L., 20124 Milano (IT)
(72) Inventor: BOTTI, Ermanno, 21025 Comerio (VA) (IT)
(74) Representative: Botti & Ferrari S.p.A.

(57) **Abstract**

The invention relates to an integrated electronic system (1), and a related method, for enabling the provision of entertainment, supervision or surveillance services. The system (1) includes:
- a plurality of drones (2) powered by batteries (6);
- a camera (3) on board each of the plurality of drones (2);
- a control and command unit (5) on board each of the plurality of drones (2) equipped with means for transceiving (7) data and images;
- a base (10) for launching and/or receiving the plurality of drones (2) equipped with a battery recharging system (11) with rapid coupling and an electronic computer (12) in bidirectional communication with the plurality of drones (2) and with a remote server (15) accessible by a remote user (U);
- each of said plurality of drones (2) being independently operable upon command of said remote user to whom said data and images are transmitted live; wherein
the electronic computer (12) is configured to manage the base (10) and determine which drone to allocate to the remote user (U) based on the remote user's needs and the charging status of the plurality of drones (2).

## Description

### Scope of application

In its most general aspect, the present invention relates to a system and method for providing entertainment, supervision or surveillance services.

More specifically, but not exclusively, the invention concerns an integrated electronic system for the provision of entertainment, supervision or surveillance services, of the type comprising:
- a plurality of drones powered by batteries;
- a camera on board each of the plurality of drones;
- a control and command unit on board each of the plurality of drones equipped with means for transceiving data and images.

In addition, the invention relates to a method for providing entertainment, supervision or surveillance services using the above integrated electronic system.

As is well known, a webcam is a small camera that can be used as an optical input device for a computer processor. The term webcam is derived from the combination of "web," short for World Wide Web, and "cam," meaning camera in the English language.

In fact, a webcam does not have its own storage system, like a traditional camera, but transmits the images taken in digital format to a computer processor.

For example, one currently quite widespread use of these webcams is for the continuous transmission of live images from certain places in the world.

This mode, called video streaming, allows a service user to be able to view live environmental conditions at a particular location of interest. For example, someone who owns a second home in a remote resort sometimes wants to check the state of the weather before traveling to that location; or he or she simply wants to enjoy viewing an environment that he or she has known in the past because he or she has been there on vacation or because blood relatives live there.

Regardless of people's motivations for wanting to view certain live images of certain locations on the planet, the solutions currently offered by known technology have certain limitations.

In fact, webcams are normally mounted on fixed locations owned by certain entities, both public and private, which are responsible for their maintenance and power supply and which allow the public to view live images, in some cases for free, in other cases for a fee.

In any case, even if these webcams are installed at scenic or special points of interest, the transmitted images are fixed or at most can rotate around an axis.

However, there is another way for many people to view remote places of interest, such as through a computer.

Consider, for example, the "Google Earth" software, which generates virtual images of the Earth using satellite images obtained from terrestrial remote sensing, aerial photographs and topographical data stored in a platform known as GIS (Geographic Information System).

This software has been around since as far back as 2004 and has been refined over the years to the point that today the program provides a three-dimensional graphics application that allows aerial and satellite photographs of the Earth to be displayed in very high detail to the point that in major cities around the planet the program is able to show images with a spatial resolution of less than one square meter.

In addition, the Google Earth program is associated with another application known as "Google Street View," which provides 360° panoramic views horizontally and 160° vertical views along streets, about 10-20 meters apart, and allows users to see parts of various cities around the world at ground level.

This service required the creation of an impressive number of photographic images taken with special cameras mounted on board vehicles that travel to many countries. The service is constantly being updated with new photos, thanks in part to user input.

While beneficial in many ways, and certainly of great use, this service offered by the Google provider still has some limitations listed below.

First, the service offers a display of static images and certainly not live images.

It is available for a great many countries but is particularly onerous in acquiring data and cannot yet allow images of all territories on the planet to be displayed.

In addition, the service offered by Google cannot offer any customization based on a user's need beyond simply rotating horizontally or vertically an overview provided by a fixed image.

Another known solution is disclosed for instance in the US patent application No. 2017/225801 disclosing an operator driving a plurality of drones by inputting commands instructing a particular drone to gather surveillance of a certain path or location. However, the specific drone is selected directly by that single operator that is not located remotely.

A further technical proposal is disclosed in the US patent application No. 2020/231054 disclosing a drone control module 310 autonomously sending flight paths to operating drones 100, adapting organically to ever changing drone 100 utilization, enabling human operators to operate individual drones 100. In case of anomalies, that system enables human operators to send high level commands to large swarms of drones 100 to accomplish complex tasks and enables human operators to quickly and easily switch control from one drone 100 to another. Although this document discloses that the control module can autonomously manage the drone's operations and switch control between drones, it does not address the allocation of drones in consideration of a remote user's needs.

Another technical solution is disclosed in US 2023/002082 wherein the personnel at a central monitoring center can directly override a drone on demand so as to aid in the resolution and clearing of a traffic incidence. However, this solution does not focus on the needs of a remote user for providing entertainment, supervision or surveillance services just for civil applications.

Further prior art disclosures are available in US 2022/127014 and CN 114 217 633 A; however, these documents focus on the charging status of a drone and not on the technical problem at the basis of the present disclosure.

The purpose of the present disclosure is to propose a technical solution having structural and functional characteristics such that an integrated, on-demand entertainment, supervision, or surveillance service can be made available to a remote user and that can overcome the limitations of the known solutions previously outlined.

Another purpose of this disclosure is to make available a system and related method susceptible to providing entertainment, supervision, or surveillance services based on specific user needs.

A further purpose of this disclosure is to enable the implementation of the service and method of entertainment, supervision, or surveillance with costs depending on the duration of its use by the remote user.

Finally, an additional purpose of the service and method of the present disclosure is to potentially cover with the service offering multiple locations on the Planet at lower costs than those requiring satellite image collection.

### Summary

The solution idea behind the present disclosure is to provide for at least one drone equipped with a webcam and means of transceiving data and images, remotely piloted via radio commands, as well as likely to depart from and return to a home base and/or host on which its battery is periodically recharged, this drone being operable upon command of a remote user to whom said data and images are transmitted live.

On the basis of this solution idea, the above purposes are solved by a system of the type previously stated and including:
- a plurality of drones powered by batteries;
- a camera on board each of the plurality of drones;
- a control and command unit on board each of the plurality of drones equipped with means for transceiving data and images;
- a base for launching and/or receiving the plurality of drones equipped with a battery recharging system with rapid coupling and an electronic computer in bidirectional communication with the plurality of drones and with a remote server accessible by a remote user;
- each of said plurality of drones being independently operable upon command of said remote user to whom said data and images are transmitted live; wherein
said electronic computer is configured to manage the base and determine which drone to allocate to the remote user based on the remote user's needs and the charging status of the plurality of drones.

In other words, the subject-matter of the present application relates to an electronic system for providing entertainment, supervision, or surveillance services based on the specific needs of a remote user, wherein an electronic computer of the system determines which drone to allocate to the remote user based on the remote user's needs and the charging status of the plurality of drones.

Advantageously, the base comprises a plurality of reception or housing areas for a corresponding one of the plurality of drones.

Moreover, each of the plurality of reception and housing areas also provides charging for a battery of a corresponding one of the plurality of drones by means of the battery recharging system .

It remarkable that the battery recharging system comprises a pair of terminations surfacing from a corresponding one of the plurality of drones and a corresponding pair of charging plates disposed on a corresponding one of the plurality of reception or housing areas for the plurality of drones .

Furthermore, the flight time of a corresponding one of the plurality of drones is automatically limited by the capacity of the battery on board the drone, in consideration also of time required to return to the base as computed by said electronic computer.

Advantageously, at least some of said plurality of drones are of an ultralight type, weighing less than 249 grams.

This disclosure also covers a method for providing entertainment, supervision, or surveillance services, including:
- arranging a plurality of drones powered by batteries and equipped with cameras;
- accommodating the plurality of drones on a base equipped with a battery recharging system;
- receiving from a remote user flight control instructions of at least one of the plurality of drones by means of an electronic computer associated with the base and in bidirectional communication both with one of the plurality of drones and with a remote server accessible to the remote user;
- remotely controlling the flight of at least one of said plurality of drones to transmit live data and images to the remote user;
wherein the electronic computer is configured to manage the base and determine which drone to allocate to the remote user based on the remote user's needs and the charging status of the plurality of drones.

The data and images are collected from the one of the plurality of drones by means of a control and command unit associated with data and images transceiving means.

Moreover, the flight is operated for a predetermined time corresponding to an amount paid by the user for the flight.

It is remarkable that the battery recharging system comprises a pair of terminations surfacing from a corresponding one of the plurality the of drones and a corresponding pair of charging plates disposed on a corresponding one of the plurality of reception or housing areas for quick-coupling a corresponding one of said plurality of each drones upon its landing on said base.

Advantageously, the selected one of the plurality of drones is operated for a predetermined time corresponding to the charging status of its battery.

Further features and advantages of the system and method according to this disclosure will result from the description, made below, of a preferred example of implementation given for illustrative and non-limiting purposes with reference to the attached figures.

### Brief description of the figures

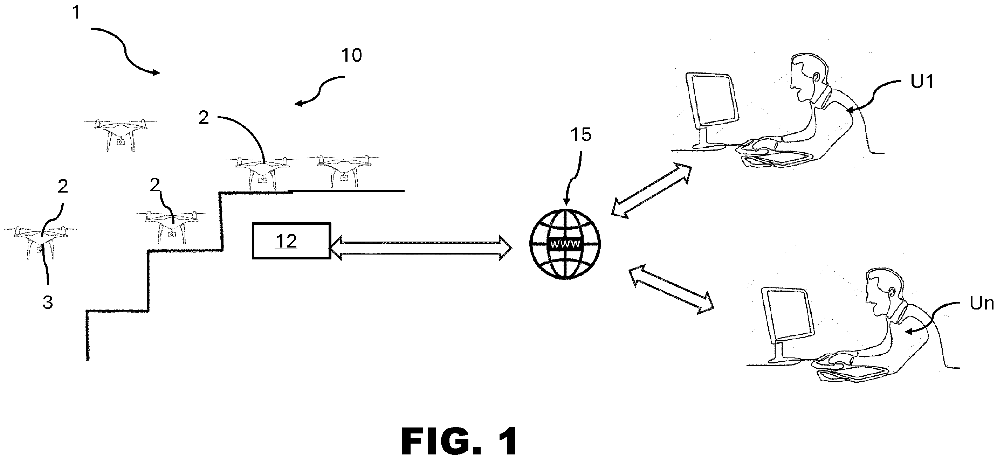

Figure 1 shows a perspective and schematic overview view of an articulated system for service delivery according to this disclosure;

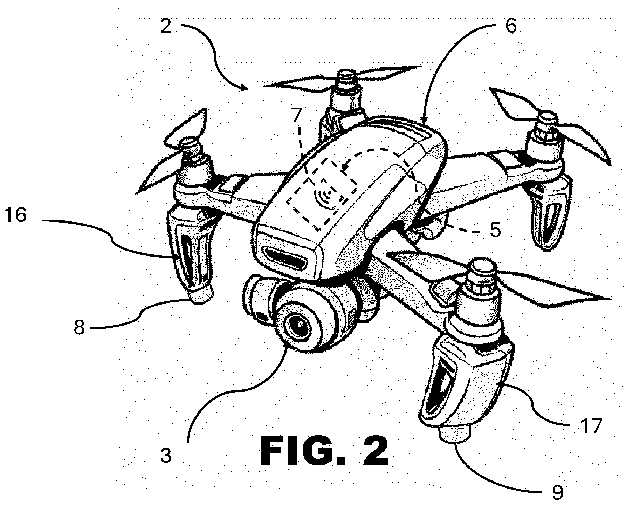

Figure 2 is a perspective and schematic view of a drone employed in the system in Figure 1;

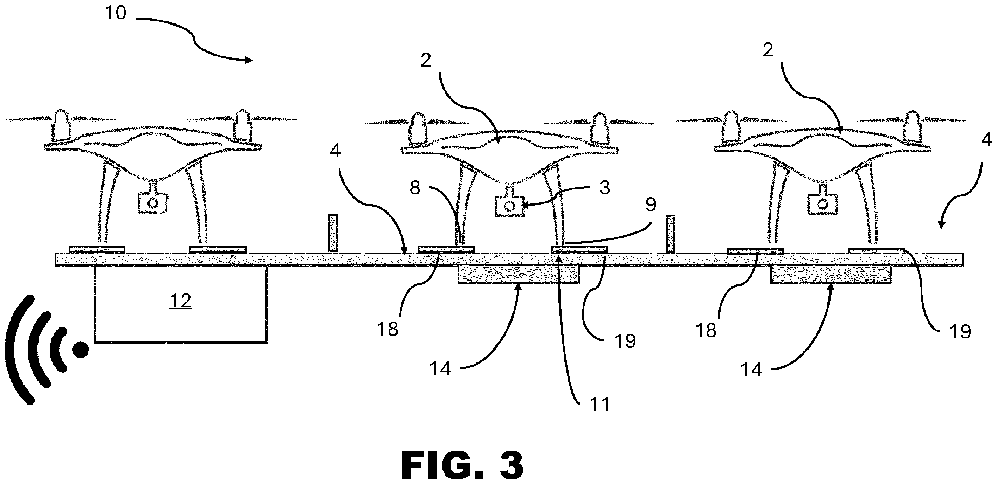

Figure 3 shows a more detailed schematic view of a detail of the system in Figure 1;

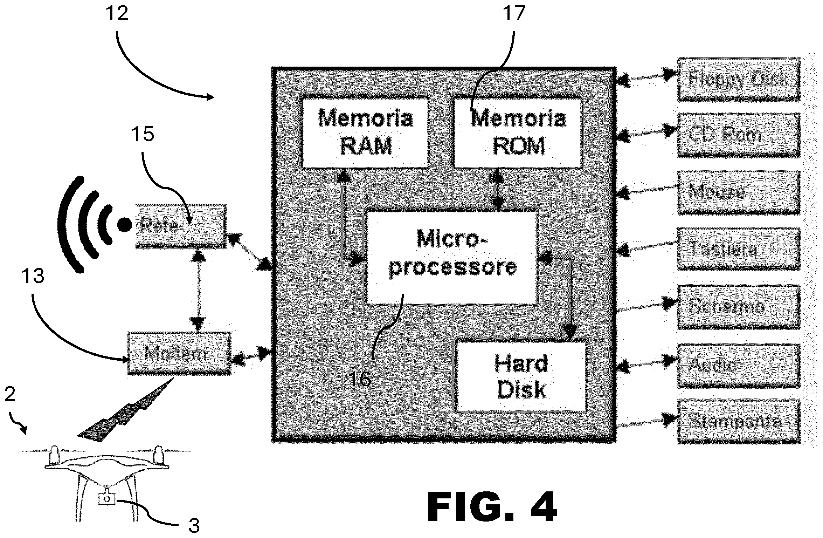

Figure 4 is a schematic block view of details and component parts of the system in Figure 1;
Figure 5 is a flow diagram illustrating the method of the present disclosure implemented through the system in Figure 1.

In the different figures, similar elements will be identified by similar reference numbers.

### Detailed description

With reference to the attached figures, 1 denotes an articulated but integrated system implemented according to this disclosure for the purpose of enabling the provision of entertainment, supervision, or remote surveillance services.

System 1 involves the use of a plurality of high-quality aerial drones 2 each equipped with a high-definition camera 3. Drones 2 are parked in a launching or hosting base 10 which we will discuss below.

Firstly, we will now focus on the technical characteristics of a single drone 2 suitable for system 1 in this disclosure.

One type of drone 2 suitable for the purpose is an ultralight type, such as a drone with a total takeoff weight of less than 600 grams.

It is noteworthy that a take-off weight of less than 249 grams would, in many jurisdictions, avoid registration and authentication of users using drone 2. However, since the system and method of this disclosure are intended to be operated by an entity, whether public or private, of regular administrative registration, a weight of drone 2s in excess of 250 grams may not be a limitation in the sense that their use would be regularly registered and authorized.

The drone 2 designed for the applications of this disclosure includes means to ensure stable and safe flight in order to facilitate the quality of footage taken by the camera 3.

Advantageously, drone 2 also includes a long-life rechargeable or upgraded battery 4 likely to provide a flight time of at least 30 to 40 minutes. Such a battery 4 is regularly recharged when the drone 2 is parked on the base 10 by means of a quick-coupled battery 11 charging system 4.

More specifically, drone 2 includes terminations 8, 9 surfacing or projecting intended to mate to corresponding charging plates 18, 19 present on the starting base 10 when drone returns to base 10. Rapid coupling can be provided by magnetization of terminations 8 and 9. The terminations 8 and 9 are preferably surfaced inferiorly from support feet 16, 17 of the drone 2 itself or may be hinged plates.

In addition, the drone 2 includes on board an electronic control and command unit 5 incorporating a guidance system with automatic flight mode, GPS positioning, obstacle sensor and automatic return function. These features make the drone 2 likely to have adequate flight time on trajectory and in total safety with intelligent obstacle avoidance, sufficient vertical height, and remote control of flight with rapid command return.

A fit-for-purpose drone 2 could, for example, be of the type commercially known as Skyvox V168 or similar, having an HD camera of at least 8K.

As for camera 3, it is likely to capture live still or moving images that can be transmitted in real time to a computer 12 by means 7 of data and image transceiver.

More specifically, there is a 5 control and command unit on board the drone 2 itself that is coupled with said means 7 of data and image transceiving.

The effective distance and stability of the image transmission signal also determines the operational range of the drone, which for the purposes of this disclosure must be able to cover a flight time of at least 30 to 40 minutes before having to return to base 10.

The hosting base 10 is a fixed, or vehicle-mounted, location that includes a plurality of areas 4 of housing and charging for a corresponding drone 2.

Area 4s are large enough so that a drone 2 can land on them with sufficient clearance to not encroach on or interfere with the space of an adjacent area 4.

The 4 areas can be adjacent to each other or separated just enough to make it efficient and effective for each drone 2 to take off independently, as in a kind of aircraft carrier, but with the difference that the ability of each drone to also rise vertically can allow multiple drones 2 to take off at the same time.

Each area 4 includes two charging plates 18, 19 representing the output terminations of an electric charging transformer 14 of conventional type assigned to a corresponding area 4.

Each transformer can be provided, for example, below each area 4 in a position below starting base 10.

Wiring is, of course, provided to electrically power each transformer and the respective terminations consisting of charging plates 18, 19.

In addition, the hosting base 10 with all areas 4 of drone reception 2 is subservient to the control of a computer 12 processor that includes at least:
- means of receiving 13 data and images transmitted in flight by drones 2 over respective communication channels;
- put of interconnection 15 with a WEB network server;
- means of processing 16 commands and instructions received remotely from users U1,..., Un which are eager to interact with one of the drones 2, to fly it to a desired direction.

Processor 12 also includes a capable nonvolatile memory unit 17 that also allows for the storage of video image recordings of a given user U in the event of a loss of connection to the Web network, so that the user can eventually batch retrieve the images he or she had commissioned or was viewing live.

Thus, processor 12 includes means 13 and 16 and component parts likely to put it in a position to receive data and information from drones 2 in flight; to issue flight instructions and commands to the control unit 5 aboard drone 2; to communicate bidirectionally with other networked processors 15; and to transmit live video images to a remote user U1, ...Un who wishes to issue flight commands to one of the drones 2 in base 10.

Specific piloting software regulates the user's ability to give flight instructions such as: the drone's takeoff, its forward or backward movement, as well as left or right turns or even the stationing phase in place.

The processor 12 that manages the drone hosting base is configured to adjust their selection in such a way as to, for example, assign to a given user the drone with the most complete charge state.

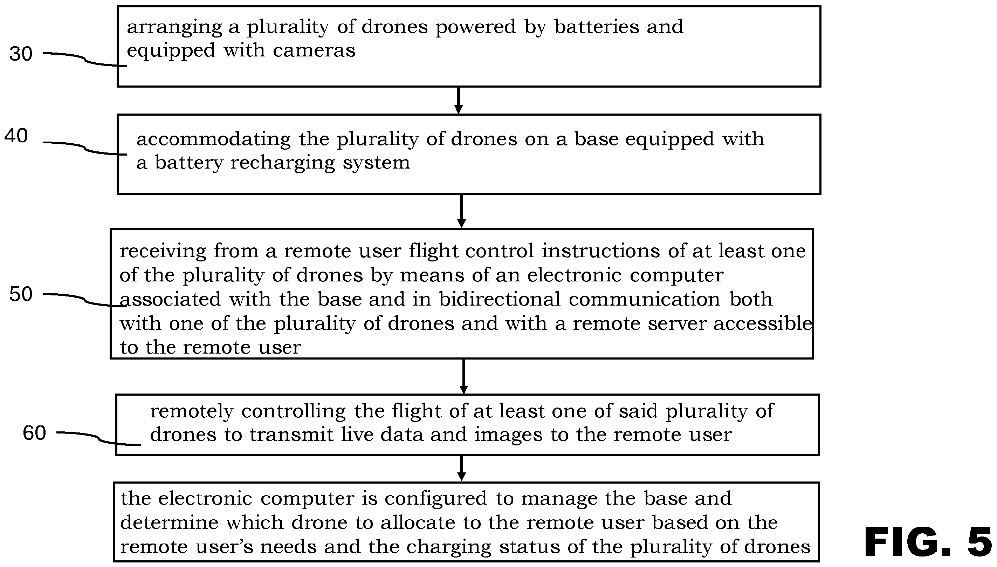

The method of the present disclosure will now be described as enabling an organization to set up an entertainment, supervision, or surveillance service offering, depending on the needs of the users. The method will be described by referring to the flowchart in Figure 5 and based on the availability of the integrated system 1 described above.

For the implementation of the method of this disclosure, a plurality of drones 2, having the characteristics previously described and illustrated, should be prepared as shown in Step 30.

Even one such drone 2 would suffice, but for the set-up of a more comprehensive service for the benefit of a plurality of users U1, ..., Un it is more efficient to have a plurality of drones individually piloted independently by each individual U user through simple remote piloting software.

Once the various drones 2 have been accommodated on the starting base 10, each of them is ready to perform a data and video image collection service in servitude to pilot commands received from a user U1, ..., Un, as shown in step 40.

Host base 10 can be operated by an entity or organization wishing to provide a fee-based service to a remotely located user.

For example, it is possible to provide for registration and subscription of users who can then provide credentials to access and charge for the cost of the service rendered to the organization that takes care of the setup and maintenance of the drones 2.

Drones 2 are constantly made available for service on the host base 10 being stably maintained with a charged battery 6 by the coupling of the quick-engage and quick-disengage 11 charging system. Obviously, a drone that has just returned from a service will remain on charge until the processor 12 makes it available again to be selectable by a user.

At this point, system 1 is ready to receive from a user U1, ..., Un a remote flight command instructions for one of the drones 2 by means of software signals that are received by the electronic processor 12 associated with the hosting base 10, as shown in step 50.

Piloting software is provided with related software routines that allow the user to issue simple piloting commands such as: takeoff, forward, backward, right or left turn, as well as command a stationary phase near a scenic attraction of interest to the user.

Processor 12 is in a two-way communication with both drone 2 and a remote server 15 accessible to user U1, ..., Un.

In this way, it is possible to remotely control the flight of a drone 2 for a predetermined amount of time, such as based on an amount paid by the user or based on what the user is charged for the service rendered. In each case, a given user U1, ..., Un remotely and live receives the images collected by the drone, as highlighted in Step 60. This mode of service has the great advantage of allowing a user to see live images of points of interest in a perspective mode and from above as well as according to various angles piloted by him.

It is clear that these images may be simply recreational in nature and allow the user to review live images of areas or landscapes that he or she is already familiar with; or to carry out a monitoring activity over an area that is familiar to him or her. Obviously, this hypothesis must be compatible with the legislation in force in a given territory or jurisdiction, which may have restrictions on access to certain areas of a military or civilian nature.

This may be taken into account by the application available to the user, which may provide restrictions on access to certain areas of which the user is notified in advance. This is also the case for situations where daytime viewing is prevented by the time zone of a given location, something of which the user is notified in advance with respect to a possible charge.

The service, however, can allow a user to view on-demand images even of locations he or she has never been to or can never physically afford to go to; in this sense, the service is particularly useful for people with disabilities or mobility limitations due to age or disease. System 1 thus makes it possible to set up a service for exploring even places or landscapes that have never been seen before or are difficult to access.

The service rendered by the organization in charge of setting up and maintaining the drone station is expected to be paid for, at least to recover the out-of-pocket expenses of power supply and/or replacement of any damaged or malfunctioning drones.

The organization may plan to set up multiple drone departure stations or bases in multiple locations in a nation that allows this service to be set up or in locations on the planet with no access restrictions, all consistent with the laws and permits required to conduct this service in a given country.

The service is intended to be "on-demand" in the sense that the Ui user is free to pilot the drone flight without interference of any kind, effectively becoming responsible for the in-flight guidance through the automation offered by the piloting software.

Obviously, the flight time is limited by the capacity of the battery on board the drone and if the user were to exceed this limit, the drone would be automatically called back to the home base to recharge. The management software alerts the user of this eventuality while also taking into account the flight time already flown and thus the time needed to safely return to base.

Changes and variations may be made to the system and method of this disclosure that are obvious to a branch technician and within the scope of the following claims.

## Claims

1. An integrated electronic system (1) for providing entertainment, supervision, or surveillance services, comprising:
- a plurality of drones (2) powered by batteries (6);
- a camera (3) on board each of the plurality of drones (2);
- a control and command unit (5) on board each of the plurality of drones (2) equipped with means for transceiving (7) data and images;
- a base (10) for launching and/or receiving the plurality of drones (2) equipped with a battery recharging system (11) with rapid coupling and an electronic computer (12) in bidirectional communication with the plurality of drones (2) and with a remote server (15) accessible by a remote user (U);
- each of said plurality of drones (2) being independently operable upon command of said remote user to whom said data and images are transmitted live; wherein
the electronic computer (12) is configured to manage the base (10) and determine which drone to allocate to the remote user (U) based on the remote user's needs and the charging status of the plurality of drones (2).

2. The integrated electronic system (1) according to claim 1, wherein said base (10) comprises a plurality of reception or housing areas (4) for a corresponding one of the plurality of drones (2).

3. The integrated electronic system (1) according to claim 2, wherein each of the plurality of reception and housing areas (4) also provides charging for a battery (6) of a corresponding one of the plurality of drones (2) by means of the battery recharging system (11).

4. The integrated electronic system (1) according to claim 3, wherein the battery recharging system (11) comprises a pair of terminations (8, 9) surfacing from a corresponding one of the plurality of drones (2) and a corresponding pair of charging plates (18, 19) disposed on a corresponding one of the plurality of reception or housing areas (4) for the plurality of drones (2).

5. The integrated electronic system (1) according to claim 1, wherein a flight time of a corresponding one of the plurality of drones (2) is automatically limited by the capacity of the battery (6) on board the drone, in consideration also of time required to return to the base (10) as computed by said electronic computer (12).

6. The integrated electronic system (1) according to claim 1, wherein at least some of said plurality of drones (2) are of an ultralight type, weighing less than 249 grams.

7. A method for providing entertainment, supervision, or surveillance services, comprising:
- arranging a plurality of drones (2) powered by batteries (6) and equipped with cameras (3);
- accommodating the plurality of drones (2) on a base (10) equipped with a battery recharging system (11);
- receiving from a remote user (U) flight control instructions of at least one of the plurality of drones (2) by means of an electronic computer (12) associated with the base (10) and in bidirectional communication both with one of the plurality of drones (2) and with a remote server (15) accessible to the remote user (U);
- remotely controlling the flight of the one of said plurality of drones (2) to transmit live data and images to the remote user (U); wherein the electronic computer (12) is configured to manage the base (10) and determine which drone to allocate to the remote user (U) based on the remote user's needs and the charging status of the plurality of drones (2).

8. The method according to claim 7, wherein said data and images are collected from the one of the plurality of drones (2) by means of a control and command unit (5) associated with data and images transceiving means (7).

9. The method of claim 7 wherein at least some of said plurality of drones (2) are of an ultralight type, weighing less than 249 grams.

10. The method according to claim 7, wherein the flight is operated for a predetermined time corresponding to an amount paid by the user for the flight.

11. The method of claim 7 wherein the battery recharging system (11) comprises a pair of terminations (8, 9) surfacing from a corresponding one of the plurality the of drones (2) and a corresponding pair of charging plates (18, 19) disposed on a corresponding one of the plurality of reception or housing areas (4) for quick-coupling a corresponding one of said plurality of each drones (2) upon its landing on said base (10).

12. The method of claim 7, wherein the selected one of the plurality of drones is operated for a predetermined time corresponding to the charging status of its battery.
